# EUROPEAN PATENT SPECIFICATION

(11) **EP 2 695 719 B1**
(45) Date of publication and mention of the grant of the patent: **14.10.2020**
(21) Application number: 13178938.0
(22) Date of filing: 01.08.2013
(51) Int. Cl.: B29C 48/152, B29C 48/30, B29C 44/22, B29C 48/09, B29C 48/16, B29C 48/88, B29C 48/49

(54) **Method for the production of a profiled element and related plant**
Verfahren zur Herstellung eines profilierten Elements und zugehörige Anlage
Procédé pour la production d'un élément profilé et installation associée

(30) Priority: 07.08.2012 IT VR20120162
(43) Date of publication of application: 12.02.2014
(73) Proprietor: Roverplastik S.P.A., 38060 Volano (TN) (IT)
(72) Inventor: Guardini, Aldo, 38121 Trento (IT)
(74) Representative: Modiano, Micaela Nadia

(56) References cited:
- EP-A1- 0 662 384
- WO-A1-2009/062986
- WO-A1-2012/034146
- DE-A1- 19 509 330
- DE-A1- 19 752 871
- GB-A- 1 273 706
- JP-A- S 527 061
- JP-A- S59 140 034
- JP-A- 2004 351 782
- US-A- 5 945 048
- US-A1- 2003 003 252
- US-A1- 2006 113 692
- US-B2- 7 008 577

## Description

The present invention relates to a method for the production of a profiled element and to the related plant.

In building construction, and in particular in the field of door and window frames, hollow profiles made of soft material (such as for example PVC or silicone) or rigid material (such as plastic or aluminum) are widely used, inside which longitudinal cavities are formed.

In many applications it can be particularly advantageous to provide for the filling of such cavities.

For the purposes of example, for gaskets, for example for door and window frames, or with reference to slats for roll-up elements in aluminum, covering panels or door and window frames, production methods have been devised which aim at obtaining a profiled element with longitudinal cavities that are filled with materials from the family of polyurethanes which have, as is known, characteristics such as elastic response that is extremely constant over time (useful for gaskets) or such as thermal insulation (important for slats for roll-up elements).

In the current state of the art, the methods of obtaining profiled elements having longitudinal cavities filled with polyurethane can be summed up as follows:
- production on the assembly line with processes for folding plates using rollers: the polyurethane resin is poured on the open plate, which is subsequently closed by forming, so as to provide a closed profile;
- production on the assembly line with processes for coupling plates or rigid half-shells: the resin polyurethane is distributed over a band-shaped support element which is subsequently coupled with a second band-shaped upper element which contains the expansion of the resin and, through it, is coupled to the band-shaped support element; laterally the expansion of the resin is contained by adapted rollers or by way of folding and closing the longitudinal edges of the band-shaped elements which are thus coupled;

- method used off the assembly line, by way of injection of the polyurethane resin into portions of profiled elements, breaking continuity and carried out away from the production (extrusion) line of the profiled elements;
- line production method by way of extrusion of open profiled elements, which after pouring the resin are closed.

It seems evident that the production processes briefly described above limit the possibility of performing a pour on the production line only to the production of elements that can be profiled, in any case requiring more processing steps when starting from semifinished bands.

Alternatively one has to resort to injection off-line (breaking continuity), reprocessing profiles made previously or extruding open profiles that can be closed, thus limiting applicability to lightweight profiles that can be closed when cold.

JP S59 140034 A discloses a method of continuously obtaining a synthetic resin molding filled with a fibrous reinforcing foam by packing a foam reinforced with long fibers into the cavity of a synthetic resin molding. A thermoplastic synthetic resin is molded into a square pipe having a cavity over its whole length from molds to a longitudinal direction by means of an extruder. A fiber bundle is formed by uniformly impregnating a thermosetting expandible liquid into a fiber bundle composed of long fibers, e.g., glass fibers, etc., and the fiber bundle is continuously supplied into the cavity of the molding from a nozzle. The molding whose cavity is filled with the long fibers impregnated with the expandible liquid is directed into a molding pathway, and the expandible liquid is expanded to obtain a product in which the long fibers are uniformly dispersed in the expanded body in the cavity of the molding.

US 7 008 577 B2 discloses a coextrusion extrusion head for extruding a two-layer tube with an internal layer of unexpanded plastic and an external layer of expanded plastic, the layers being joined during coextrusion at a die annular orifice.

DE 197 52 871 A1, EP 0 662 384 A1, JP 2004 351782 A and GB 1 273 706 A disclose further methods and plants for producing multicomponent profiled elements.

The aim of the present invention is to provide a method for the production of a profiled element and a related plant that is capable of eliminating, or at least drastically reducing, the above-mentioned drawbacks.

Within this aim, an object of the present invention is to provide a method for the production of a profiled element, and the related plant for carrying out such method, which makes it possible to provide, at low cost, gaskets, slats for roll-up elements or parts of frames of extremely varied shapes and hardnesses so as to enable their use in widely varying fields of application.

This aim and these and other objects which will become more apparent hereinafter are all achieved by a method for the production of a profiled element according to claim 1 and by the related plant according to claim 6.

Further characteristics and advantages of the invention will become more apparent from the description of a number of preferred but not exclusive embodiments of a method for providing a profiled element according to the present invention, which are illustrated by way of nonlimiting example in the accompanying drawings wherein:

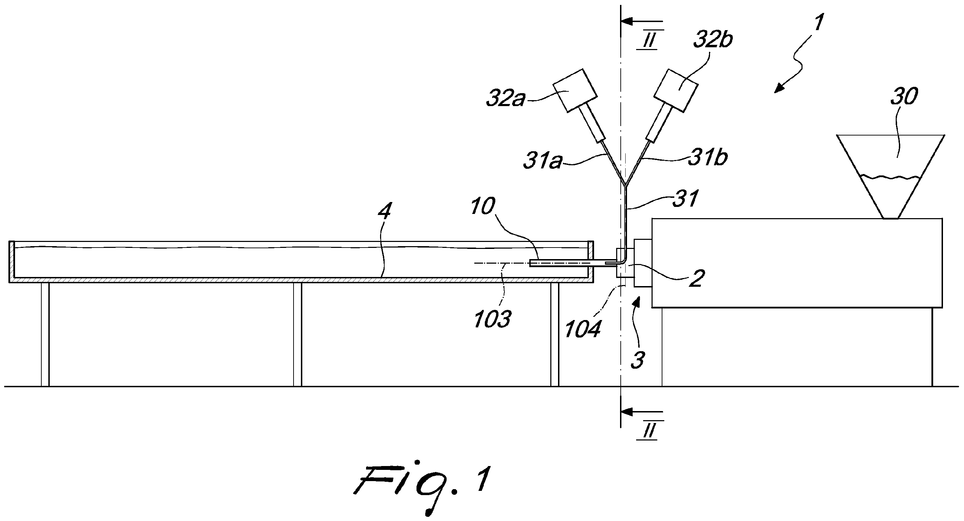

Figure 1 is a schematic view of a plant for producing an extruded profiled element;

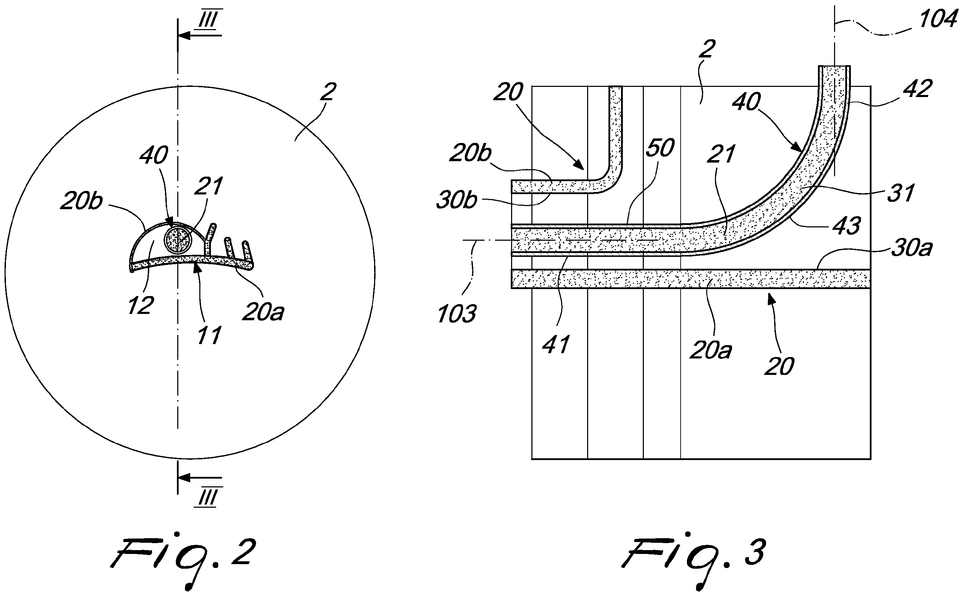

Figure 2 is a schematic sectional view of the extrusion head, along the line II-II in Figure 1;
Figure 3 is a schematic sectional view of the extrusion head, along the line III-III in Figure 2.

In the embodiments illustrated, individual characteristics shown in relation to specific examples may in reality be interchanged with other, different characteristics, existing in other embodiments.

The present invention relates to a method for providing a profiled element, generally indicated with the reference numeral 10.

The method comprises a step of pressing at least one first material 20 through a forming die 2 in order to obtain a profiled element 11 which is provided with at least one longitudinal cavity 12.

According to the present invention, the method includes a step of feeding, into the forming die 2, a second material 21 in the fluid state in order to fill the longitudinal cavity 12.

Specifically, the feeding of the material intended to fill the longitudinal cavity 12 is performed directly in the forming die 2.

The first material 20 can be selected from the group of metals (aluminum, steel etc.) or from the group of polymeric materials (PVT, PE, silicones etc.).

The second material 21 is selected, preferably, from the group of polymeric materials.

In particular, it is particularly advantageous in many fields of use to employ second materials 21 belonging to the family of polyurethane-based materials and, specifically, of the expanded type.

In fact it has been found to be particularly advantageous to completely fill the longitudinal cavity 12 with the second material 21.

The method according to the invention involves the use of a feeder 31 of the second material 21 in the fluid state.

The feeder 31 comprises at least one feeding duct 40 made of non-stick polymeric material.

The feeding duct 40 leads into a feeding cavity which is defined at the forming die 2.

The feeding duct 40 is removably inserted into an accommodation duct, indicated with the reference numeral 50, through the forming die 2.

Advantageously, the pressing step consists of an extrusion or of a pultrusion of the second material 21.

Specifically, the forming die is constituted, respectively, by at least one extrusion head or by at least one pultrusion head.

The method includes, conveniently, a step of cooling the profiled element in output from the forming die 2.

It has been found to be extremely practical to use the method according to the invention to provide a profiled element 10 in order to obtain:
- a profile with a filler made of an expanded material;
- a gasket with a filler made of expanded material;
- a profile with an internal reinforcement element;
- a profile with an elastic joining element;
- a window profile with insulating expanded material;
- a plate-like element containing an insulating expanded material for providing insulated façades or coverings;
- an element of boxes for roll-up elements containing insulating expanded material;
- an element for providing window holes containing insulating expanded material;
- a roll-up element containing insulating expanded material;
- a lightened profile for swimming pool coverings containing internal expanded material adapted to facilitate floating on water.

The present invention relates, furthermore, to a plant, generally indicated with the reference numeral 1, for the production of a profiled element 10.

The plant 1 comprises a forming assembly 3 for a first material 20.

The forming assembly 3 comprises at least one forming die 2 for obtaining a profiled element 11 which has at least one longitudinal cavity 12.

The plant 1 has, within the forming die or dies 2, a feeder 31 of a second material 21 in the fluid state.

Specifically, such second material 21 in the fluid state is intended to fill the longitudinal cavity 12.

The first material 20 is selected from the group of metals or from the group of polymeric materials.

The second material 21 is selected from the group of polymeric materials and, preferably, from the family of polyurethane-based materials, optionally expanded.

The feeder 31 comprises at least one feeding duct 40 made of TEFLON® which is a non-stick polymeric material, leading into a feeding cavity defined at the forming die 2.

The feeding duct 40 is removably inserted into an accommodation duct 50 through the forming die 2.

In this manner it is possible to periodically change the feeding duct 40 which, being traversed by a polyurethane-based material, is subject to clogging and/or blockage.

The accommodation duct 50 comprises a first portion which has a substantially radial extension 104 with respect to the extension of the longitudinal cavity, and is connected with a second portion which is substantially parallel to the direction of extension of the longitudinal cavity 103.

The feeding duct 40 thus has, when inserted into the accommodation duct 50, a first portion 41 which extends radially and a second portion 42 which extends longitudinally, which are connected by a curvilinear connecting portion 43.

It has been found that, in many applications, such as for example the application indicated in the figures which shows a plant for making gaskets, it is advantageous to use a first first material 20a to provide a first portion of the profiled element 11 and a second first material 20b to provide a second portion of the profiled element 11.

Advantageously, the plant has a tank 4 for cooling the profiled element 10 in output from the forming die 2.

According to a preferred embodiment, the feeder 31 comprises at least one feeding duct made of TEFLON® which is a non-stick polymeric material.

The choice to make the feeding duct of TEFLON®, that is non-stick and is capable of withstanding high temperatures, makes it possible to prevent blocking of the feeding duct if the dispensing of the second material through the feeding duct should be interrupted.

Conveniently, the feeding duct made of non-stick polymeric material can lead into a feeding cavity defined at the forming die 2.

At the end opposite to the forming die 2, the feeder 31 is connected, in input, to at least one machine 32a for the dosage of the second material 21.

Advantageously, the feeder 31 is connected, in input, to two machines 32a and 32b for the dosage of the second material 21.

In this regard, a connection can be provided between two duct portions 31a and 31b which are connected to the respective dosing machine 32a and 32b.

At the connection it is possible to connect, through the respective duct portion, the dosing machine 32a or 32b as a function of the feeder 31.

Such a choice of construction makes it possible to continuously supply, without machine shutdown, the second material 21 to the forming die 2.

The forming die 2 can be constituted by at least one extrusion head (if an extrusion process is to be used for the production of the profiled element 10) or by at least one pultrusion head (if a pultrusion process is to be used for the production of the profiled element 10).

In practice the method and the plant according to the invention make it possible to obtain extremely high-performing profiles in terms of rigidity, permanent elasticity or other characteristics depending on the profile and the composition of the second selected material 21, thus eliminating the need to insert other elements, for example made of metal, or anything else, that confers rigidity on the profiled element.

Moreover, it is possible to obtain lightweight profiled elements thus compensating the decrease in weight with the insertion of polyurethane foams which confer rigidity and resistance to shock.

Finally, it is possible to modify the physical properties of the profiled element by inserting, in the longitudinal cavities, adapted polyurethane resins which can have characteristics of electrical conductivity or other characteristics that are supplementary to or different from the material with which the profiled element is provided.

It is also possible to continuously provide elastic or structural elements which are combined with the profiled element.

## Claims

1. A method for the production of a profiled element (10) comprising a step of pressing at least one first material (20) through a forming die (2) in order to obtain a profiled element (11) which has at least one enclosed internal longitudinal cavity (12), a step being provided of feeding, into said forming die (2), a second material (21) in the fluid state in order to fill said at least one longitudinal cavity (12), said second material (21) being selected from the family of polyurethane-based materials, a feeder (31) for said second material (21) in the fluid state being provided which comprises at least one feeding duct (40) made of non-stick polymeric material that leads into a feeding cavity that is formed at said forming die (2) **characterized in that** said non-stick polymeric material is TEFLON® and said feeding duct (40) is removably inserted into an accommodation duct (50) through said at least one forming die (2).

2. The method for the production of a profiled element (10) according to claim 1, **characterized in that** said at least one first material (20) is selected from the group of metals or from the group of polymeric materials.

3. The method for the production of a profiled element (10) according to claim 1 or claim 2, **characterized in that** said pressing step comprises an extrusion or a pultrusion.

4. The method for the production of an extruded profiled element (10) according to one or more of the preceding claims, **characterized in that** it comprises a step of cooling said profiled element (10) in output from said forming die (2).

5. The method for the production of an extruded profiled element according to one or more of the preceding claims, **characterized in that** said profiled element (10) comprises:
- a profile with a filler made of an expanded material;
- a gasket with a filler made of expanded material;
- a profile with a reinforcement element;
- a profile with an elastic joining element;
- a window profile with insulating expanded material;
- a plate-like element containing an insulating expanded material for providing insulated facades or coverings;
- an element of boxes for roll-up elements containing insulating expanded material;
- an element for providing window holes containing insulating expanded material;
- a roll-up element containing insulating expanded material;
- a lightened profile for swimming pool coverings containing internal expanded material adapted to facilitate floating on water.

6. A plant (1) for the production of a profiled element (10), comprising an assembly (3) for forming a first material (20), said forming assembly (3) comprising at least one forming die (2) for obtaining a profiled element (11) which has at least one enclosed internal longitudinal cavity (12), said plant (1) having, within said at least one forming die (2), a feeder (31) of a second material (21) in the fluid state which is intended to fill said at least one longitudinal cavity (12), said second material (21) being selected from the family of polyurethane-based materials, said feeder (31) comprising at least one feeding duct (40) made of non-stick polymeric material that leads into a feeding cavity that is formed at said forming die (2)
**characterized in that** said non-stick polymeric material is TEFLON® and said feeding duct (40) is removably inserted into an accommodation duct (50) through said at least one forming die (2).

7. The plant (1) according to claim 6, **characterized in that** said accommodation duct (50) comprises a first portion which has a substantially radial extension with respect to the extension (104) of the longitudinal cavity and is connected with a second portion which is substantially parallel to the direction of extension of the longitudinal cavity (103).

8. The plant (1) according to claim 6 or claim 7, **characterized in that** said at least one first material (20) is selected from the group of metals or from the group of polymeric materials.

9. The plant (1) according to one or more of claims 6 to 8, **characterized in that** it comprises a tank (4) for cooling said profiled element (10) in output from said forming die (2).

10. The plant (1) according to one or more of claims 6 to 9, **characterized in that** said feeding duct (40) made of non-stick polymeric material leads into a feeding cavity that is formed at said forming die (2).

11. The plant (1) according to one or more of claims 6 to 10, **characterized in that** said feeder (31) is connected in input to at least one machine (32a) for the dosage of said second material (21).

12. The plant (1) according to one or more of claims 6 to 11, **characterized in that** said feeder (31) is connected in input to two machines (32a, 32b) for the dosage of said second material (21).

## Patentansprüche

1. Ein Verfahren zur Herstellung eines profilierten Elements (10), das einen Schritt des Pressens mindestens eines ersten Materials (20) durch eine Prägeform (2) umfasst, um ein profiliertes Element (11) zu erhalten, das mindestens einen eingeschlossenen länglichen inneren Hohlraum (12) hat; wobei ein Schritt des Hinzugebens in der Prägeform (2) eines zweiten Materials (21) im Fluidzustand, um den mindestens einen länglichen Hohlraum (12) zu füllen, bereitgestellt wird, wobei das zweite Material (21) gewählt ist aus der Familie von Materialien auf Polyurethanbasis; wobei eine Speiseleitung (31) für das zweite Material (21) im Fluidzustand bereitgestellt ist, die mindestens eine Zuführleitung (40) aus nichtklebendem Polymermaterial umfasst, die in einen Speisehohlraum führt, der an der Prägeform (2) geformt ist;
**dadurch gekennzeichnet, dass**
das nichtklebende Polymermaterial TEFLON® ist und die Zuführleitung (40) durch die mindestens eine Prägeform (2) herausnehmbar in eine Aufnahmeleitung (50) eingeführt wird.

2. Das Verfahren zur Herstellung eines profilierten Elements (10) gemäß Anspruch 10, **dadurch gekennzeichnet, dass** das mindestens eine erste Material (20) gewählt ist aus der Gruppe von Metallen oder aus der Gruppe von Polymermaterialien.

3. Das Verfahren zur Herstellung eines profilierten Elements (10) gemäß Anspruch 1 oder Anspruch 2, **dadurch gekennzeichnet, dass** der Pressschritt eine Extrusion oder eine Pultrusion umfasst.

4. Das Verfahren zur Herstellung eines extrudierten profilierten Elements (10) gemäß einem oder mehreren der obigen Ansprüche, **dadurch gekennzeichnet, dass** es einen Schritt des Kühlens des profilierten Elements (10) am Ausgang der Prägeform (2) umfasst.

5. Das Verfahren zur Herstellung eines extrudierten profilierten Elements gemäß einem oder mehreren der obigen Ansprüche, **dadurch gekennzeichnet, dass** das profilierte Element (10) Folgendes umfasst:
- ein Profil mit einem Füllstoff aus einem expandierten Material,
- eine Dichtung mit einem Füllstoff aus einem expandierten Material,
- ein Profil mit einem Verstärkungselement,
- ein Profil mit einem elastischen Verbindungselement,
- ein Fensterprofil mit isolierendem expandiertem Material,
- ein plattenähnliches Element, das ein isolierendes expandiertes Material enthält, um isolierte Fassaden oder Abdeckungen bereitzustellen,
- ein Element von Kästen für Aufwickelelemente, das isolierendes expandiertes Material enthält,
- ein Element zur Bereitstellung von Fensteröffnungen, das isolierendes expandiertes Material enthält,
- ein Aufwickelelement, das isolierendes expandiertes Material enthält,
- ein erleichtertes Profil für Schwimmbadabdeckungen, das inneres expandiertes Material enthält, das ausgebildet ist, um das Treiben auf dem Wasser zu erleichtern.

6. Eine Anlage (1) für die Herstellung eines profilierten Elements (10), die einen Aufbau (3) zum Formen eines ersten Materials (20) umfasst, wobei der Formaufbau (3) mindestens eine Prägeform (2) zur Herstellung eines profilierten Elements (11) umfasst, das mindestens einen eingeschlossenen länglichen inneren Hohlraum (12) hat; wobei die Anlage (1) innerhalb der mindestens einen Prägeform (2) eine Speiseleitung (31) für ein zweites Material (21) im Fluidzustand hat, das dazu dient, den mindestens einen länglichen Hohlraum (12) zu füllen; wobei das zweite Material (21) gewählt ist aus der Familie von Materialien auf Polyurethanbasis; wobei die Speiseleitung (31) mindestens eine Zuführleitung (40) aus nichtklebendem Polymermaterial umfasst, die in einen Speisehohlraum führt, der an der Prägeform (2) geformt ist;
**dadurch gekennzeichnet, dass**
das nichtklebende Polymermaterial TEFLON® ist und die Zuführleitung (40) durch die mindestens eine Prägeform (2) herausnehmbar in eine Aufnahmeleitung (50) eingeführt ist.

7. Die Anlage (1) gemäß Anspruch 6, **dadurch gekennzeichnet, dass** die Aufnahmeleitung (50) einen ersten Abschnitt umfasst, der eine Ausdehnung hat, die im Wesentlichen radial zur Ausdehnung (104) des länglichen Hohlraums und mit einem zweiten Abschnitt verbunden ist, welcher im Wesentlichen parallel zur Ausdehnungsrichtung des länglichen Hohlraums (103) ist.

8. Die Anlage (1) gemäß Anspruch 6 oder Anspruch 7,
**dadurch gekennzeichnet, dass** das mindestens eine erste Material (20) gewählt ist aus der Gruppe von Metallen oder aus der Gruppe von Polymermaterialien.

9. Die Anlage (1) gemäß einem oder mehreren der Ansprüche 6 bis 8,
**dadurch gekennzeichnet, dass** sie einen Tank (4) umfasst, um das profilierte Element (10) am Ausgang der Prägeform (2) zu kühlen.

10. Die Anlage (1) gemäß einem oder mehreren der Ansprüche 6 bis 9,
**dadurch gekennzeichnet, dass** die Zuführleitung (40) aus nichtklebendem Polymermaterial in einen Zuführhohlraum führt, der an der Prägeform (2) geformt ist.

11. Die Anlage (1) gemäß einem oder mehreren der Ansprüche 6 bis 10,
**dadurch gekennzeichnet, dass** die Speiseleitung (31) am Eingang mit mindestens einer Maschine (32a) für die Dosierung des zweiten Materials (21) verbunden ist.

12. Die Anlage (1) gemäß einem oder mehreren der Ansprüche 6 bis 11,
**dadurch gekennzeichnet, dass** die Speiseleitung (31) am Eingang mit zwei Maschinen (32a, 32b) für die Dosierung des zweiten Materials (21) verbunden ist.

## Revendications

1. Procédé pour la production d'un élément profilé (10) comprenant une étape de pressage d'au moins un premier matériau (20) à travers une matrice de formage (2) afin d'obtenir un élément profilé (11) qui a au moins une cavité longitudinale (12) interne close, une étape étant prévue d'alimentation, dans ladite matrice de formage (2), d'un second matériau (21) dans l'état fluide afin de remplir ladite au moins une cavité longitudinale (12), ledit second matériau (21) étant sélectionné dans la famille des matériaux à base de polyuréthane, un dispositif d'alimentation (31) pour ledit second matériau (21) dans l'état fluide étant fourni qui comprend au moins un conduit d'alimentation (40) fait d'un matériau polymère non collant qui mène dans une cavité d'alimentation qui est formée au niveau de ladite matrice de formage (2) **caractérisé en ce que** ledit matériau polymère non collant est du TEFLON® et ledit conduit d'alimentation (40) est inséré de manière amovible dans un conduit d'accueil (50) à travers ladite au moins une matrice de formage (2).

2. Procédé pour la production d'un élément profilé (10) selon la revendication 1, **caractérisé en ce que** ledit au moins un premier matériau (20) est sélectionné dans le groupe des métaux ou dans le groupe des matériaux polymères.

3. Procédé pour la production d'un élément profilé (10) selon la revendication 1 ou la revendication 2, **caractérisé en ce que** ladite étape de pressage comprend une extrusion ou une pultrusion.

4. Procédé pour la production d'un élément profilé (10) extrudé selon une ou plusieurs des revendications précédentes, **caractérisé en ce qu'**il comprend une étape de refroidissement dudit élément profilé (10) lors de la sortie de ladite matrice de formage (2).

5. Procédé pour la production d'un élément profilé extrudé selon une ou plusieurs des revendications précédentes, **caractérisé en ce que** ledit élément profilé (10) comprend :
un profilé avec une charge faite d'un matériau expansé ;
une garniture avec une charge faite d'un matériau expansé ;
un profilé avec un élément de renforcement ;
un profilé avec un élément de jonction élastique ;
un profilé de fenêtre avec un matériau expansé d'isolation ;
un élément en plaque contenant un matériau expansé d'isolation pour fournir des façades ou des couvertures isolées ;
un élément de boitier pour des éléments de roulement contenant un matériau expansé d'isolation ;
un élément pour fournir des trous de fenêtre contenant un matériau expansé d'isolation ;
un élément de roulement contenant un matériau expansé d'isolation ;
un profil allégé pour des couvertures de piscine contenant un matériau expansé intérieur adapté pour faciliter le flottement sur l'eau.

6. Installation (1) pour la production d'un élément profilé (10), comprenant un ensemble (3) pour former un premier matériau (20), ledit ensemble de formage (3) comprenant au moins une matrice de formage (2) pour obtenir un élément profilé (11) qui a au moins une cavité longitudinale (12) interne close, ladite installation (1) ayant, dans ladite matrice de formage (2), un dispositif d'alimentation (31) d'un second matériau (21) dans l'état fluide qui est destiné à remplir ladite au moins une cavité longitudinale (12), ledit second matériau (21) étant sélectionné dans la famille des matériaux à base de polyuréthane, ledit dispositif d'alimentation (31) comprenant au moins un conduit d'alimentation (40) fait d'un matériau polymère non collant qui mène dans une cavité d'alimentation qui est formée au niveau de ladite matrice de formage (2) **caractérisé en ce que** ledit matériau polymère non collant est du TEFLON® et ledit conduit d'alimentation (40) est inséré de manière amovible dans un conduit d'accueil (50) à travers ladite au moins une matrice de formage (2).

7. Installation (1) selon la revendication 6, **caractérisé en ce que** ledit conduit d'accueil (50) comprend une première partie qui a une extension sensiblement radiale par rapport à l'extension (104) de la cavité longitudinale et est connectée à une seconde partie qui est sensiblement parallèle à la direction d'extension de la cavité longitudinale (103).

8. Installation (1) selon la revendication 6 ou la revendication 7, **caractérisée en ce que** ledit au moins un premier matériau (20) est sélectionné dans le groupe des métaux ou dans le groupe des matériaux polymères.

9. Installation (1) selon une ou plusieurs des revendications 6 à 8, **caractérisée en ce qu'**elle comprend un réservoir (4) pour refroidir ledit élément profilé (10) lors de la sortie de ladite matrice de formage (2).

10. Installation (1) selon une ou plusieurs des revendications 6 à 9, **caractérisée en ce que** ledit conduit d'alimentation (40) fait de matériau polymère non collant mène dans une cavité d'alimentation qui est formée au niveau de ladite matrice de formage (2).

11. Installation (1) selon une ou plusieurs des revendications 6 à 10, **caractérisée en ce que** ledit dispositif d'alimentation (31) est connecté en entrée à au moins une machine (32a) pour le dosage dudit second matériau (21).

12. Installation (1) selon une ou plusieurs des revendications 6 à 11, **caractérisée en ce que** ledit dispositif d'alimentation (31) est connecté en entrée à deux machines (32a, 32b) pour le dosage dudit second matériau (21).
